# DEMANDE DE BREVET EUROPEEN

(11) **EP 0 835 806 A1**
(43) Date de publication de la demande: **15.04.1998**
(21) Numéro de dépôt: 97402359.0
(22) Date de dépôt: 07.10.1997
(51) Int. Cl.: B64G 7/00, G09B 9/12

(54) **Dispositif d'entraînement en rotation d'un bras d'une centrifugeuse de grandes dimensions**

(30) Priorité: 08.10.1996 FR 9612257
(71) Demandeur: NFM Technologies, 92400 Courbevoie (FR)
(72) Inventeur: Lhenry, Bernard, 71200 Le Creusot (FR)
(74) Mandataire: Bouget, Lucien

(57) **Abrégé**

L'arbre d'entraînement de la centrifugeuse est relié à une couronne dentée en prise avec une pluralité de pignons. Les pignons sont entraînés chacun en rotation par un système d'entraînement comportant au moins un moteur asynchrone (12), un système d'alimentation du moteur asynchrone (12) en courant électrique comprenant, reliés à un bus (18) à courant continu, une source de courant continu (19, 20) un onduleur (17) réalisant le contrôle vectoriel du moteur asynchrone (12), un moyen de stockage d'énergie (21), de préférence sous la forme d'une batterie d'accumulateurs et une résistance électrique (25) de dissipation d'énergie, lors des freinages de la centrifugeuse. L'invention s'applique en particulier aux centrifugeuses pour l'entraînement de pilotes d'aéronefs.

## Description

L'invention concerne un dispositif d'entraînement en rotation d'un bras d'une centrifugeuse de grandes dimensions et en particulier d'une centrifugeuse pour l'entraînement de pilotes d'aéronefs.

Pour l'entraînement des pilotes d'aéronefs, on utilise des centrifugeuses d'entraînement permettant de faire subir aux pilotes, dans un but d'entraînement ou de recherche, des accélérations comparables à celles qu'ils peuvent être amenés à connaître en vol.

De telles centrifugeuses d'entraînement de pilotes comportent généralement une nacelle montée de manière articulée à l'extrémité d'un bras tournant de direction générale horizontale qui peut être mis en rotation autour d'un axe vertical.

Pour réaliser l'entraînement du bras en rotation, par l'intermédiaire de son axe, on a proposé des dispositifs d'entraînement en rotation qui sont conçus de manière à pouvoir répondre le mieux possible aux besoins quant à la puissance nécessaire pour mettre la centrifugeuse en rotation aux différentes vitesses requises par les essais.

Généralement, les centrifugeuses pour l'entraînement de pilotes d'aéronefs comportent un bras dont le rayon de rotation, c'est-à-dire la distance de l'axe de rotation du bras à l'axe de suspension de la nacelle, est compris entre 6 et 10 mètres. Les vitesses de rotation du bras doivent être comprises généralement entre 0 et 80 tours/minutes.

Le couple d'entraînement du bras à vitesse continue est relativement faible. Pour faire passer le bras à la vitesse requise, le dispositif d'entraînement motorisé du bras doit pouvoir fournir un couple d'accélération dont la valeur de crête peut être vingt fois plus importante que le couple nécessaire en régime continu.

Le dispositif d'entraînement du bras doit donc pouvoir fournir une très grande puissance pendant le temps nécessaire pour faire évoluer le vecteur accélération selon la loi souhaitée en fonction du temps.

Ce temps pendant lequel la puissance demandée est très élevée est très court et ne représente que quelques pour cent du temps de fonctionnement de la machine. De plus, chaque phase élémentaire de forte accélération ou de freinage ne dure typiquement que 1 à 5 secondes.

Les quantités d'énergie mises en jeu pendant ces phases transitoires sont faibles (moins de 4 MJoules) mais leur courte durée implique une grande puissance instantanée.

On a proposé différents dispositifs d'entraînement utilisant des moteurs électriques qui peuvent être des moteurs à courant continu ou encore des moteurs synchrones ou des moteurs asynchrones.

L'utilisation de moteurs à courant continu qui comportent un collecteur présente des inconvénients qui sont dus en particulier à la présence du collecteur qui est une partie délicate du moteur à courant continu.

L'utilisation d'un moteur unique, par exemple un moteur à courant continu, simplifie théoriquement la conception de l'installation, mais la réalisation d'un moteur pouvant assurer l'entraînement d'un bras de centrifugeuse de grandes dimensions présente des difficultés considérables et nécessite un dimensionnement du moteur qui est tout-à-fait inhabituel.

L'utilisation d'une pluralité de moteurs de forte puissance mais d'un type courant nécessite l'utilisation de réducteurs de vitesse qui augmentent l'inertie totale du dispositif d'entraînement.

En outre, pour l'alimentation des moteurs électriques pendant les phases d'accélération du bras de la centrifugeuse qui est susceptible de fonctionner avec de forts gradients de vitesse, il est nécessaire de disposer d'un réseau fournissant une très forte puissance aux moteurs électriques, pendant des phases de courte durée.

Les puissances requises pendant ces phases de courte durée peuvent être supérieures aux possibilités des réseaux dont on dispose habituellement.

En outre, pendant les phases de décélération, il est nécessaire d'absorber l'énergie fournie par la centrifugeuse dont on doit assurer le freinage.

Dans le FR-A-2.684.218, on a proposé d'utiliser des moteurs hydrauliques pour assurer l'entraînement du bras d'une centrifugeuse de grandes dimensions. Les moteurs hydrauliques assurent le freinage de la centrifugeuse du fait qu'ils sont réversibles et fonctionnent comme des pompes pendant les phases de freinage. Chaque moteur hydraulique est relié à un accumulateur de fluide à haute pression qui permet de récupérer l'énergie que le moteur hydraulique fonctionnant comme une pompe délivre pendant les phases de freinage. D'autre part, l'accumulateur de fluide à haute pression fournit au moteur hydraulique l'énergie nécessaire à son fonctionnement en régime d'accélération brusque. Des moyens de commande permettent de commander le fonctionnement comme moteurs ou comme pompes des moteurs hydrauliques.

Un tel dispositif nécessite l'utilisation de nombreux dispositifs hydrauliques et de moyens de commande associés. Le dispositif d'entraînement hydraulique de la centrifugeuse est donc généralement complexe et coûteux.

De plus, du fait que les centrifugeuses doivent fonctionner pendant de très longues périodes (par exemple de l'ordre de 30 ans), avec de courtes périodes d'arrêt, il est nécessaire de prévoir une réalisation du dispositif d'entraînement de la centrifugeuse, à partir de composants fiables à longue durée de vie et qui sont normalement disponibles dans le commerce, de manière à limiter le coût de construction du dispositif d'entraînement et à faciliter les opérations de maintenance et de réparation de ce dispositif d'entraînement de centrifugeuse.

Le but de l'invention est donc de proposer un dispositif d'entraînement en rotation d'un bras d'une centrifugeuse de grandes dimensions, pour l'obtention de forts gradients de vitesse du bras, le bras de la centrifugeuse étant relié à un arbre d'entraînement pour sa mise en rotation, ce dispositif d'entraînement étant réalisé à partir de composants de type classique analogues à ceux qui sont disponibles dans le commerce, adaptés aux conditions particulières de fonctionnement et permettant d'assurer l'entraînement en rotation du bras d'une centrifugeuse à haute performance.

Dans ce but, l'arbre d'entraînement du bras de la centrifugeuse est relié à une couronne dentée en prise avec une pluralité de pignons entraînés chacun en rotation par un système d'entraînement comportant :
- un moteur asynchrone dont l'arbre est solidaire du pignon engrenant avec la couronne,
- un système d'alimentation du moteur asynchrone en courant électrique comprenant, reliés à un bus à courant continu, une source de courant continu, un onduleur réalisant le contrôle vectoriel du moteur asynchrone et un moyen de stockage d'énergie pouvant restituer de l'énergie stockée sous forme d'un courant continu au bus, et
- une résistance électrique de dissipation d'énergie, disposée sur un circuit de dissipation d'énergie relié au bus.

Afin de bien faire comprendre l'invention, on va maintenant décrire, à titre d'exemple non limitatif, en se référant aux figures jointes en annexe, une centrifugeuse pour l'entraînement de pilotes d'aéronefs et un dispositif d'entraînement en rotation d'un bras de la centrifugeuse suivant deux modes de réalisation.

La figure 1 est une vue en élévation avec coupe partielle d'une centrifugeuse suivant l'invention.

La figure 2 est une vue de dessus schématique de la couronne dentée et des pignons d'entraînement de la centrifugeuse.

La figure 3 est une vue en coupe par un plan axial d'un dispositif d'entraînement de la couronne dentée.

La figure 4 est une vue schématique d'un système d'alimentation d'un moteur asynchrone du dispositif d'entraînement, selon un premier mode de réalisation.

La figure 5 est une vue schématique d'un système d'alimentation d'un moteur asynchrone d'un dispositif d'entraînement suivant l'invention et suivant un second mode de réalisation.

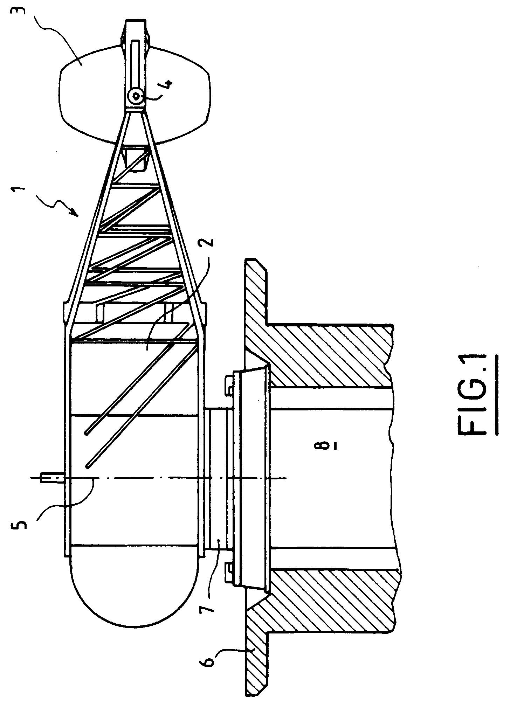

Sur la figure 1, on voit une station d'essais comportant une centrifugeuse pour l'entraînement de pilotes d'aéronefs.

La centrifugeuse, désignée de manière générale par le repère 1, comporte un bras 2 réalisé sous la forme d'un treillis métallique, de manière à obtenir une rigidité suffisante et une masse limitée du bras.

Une nacelle 3 dans laquelle le pilote peut prendre place est montée à l'une des extrémités du bras 2 avec au moins un degré de liberté par rapport au bras, la nacelle 3 étant montée articulée à l'extrémité du bras par l'intermédiaire d'au moins un axe 4.

Le bras 1 est monté mobile en rotation autour d'un axe vertical 5, par rapport au bâti 6 de la station d'essais. Pour cela, le bras 2 de la centrifugeuse est solidaire d'un arbre d'entraînement 7 qui est accouplé, à l'intérieur du bâti 6 de la station d'essais, avec un dispositif d'entraînement 8 qui sera décrit par la suite.

Le dispositif d'entraînement 8 de l'arbre 2 de la centrifugeuse 1 qui est réalisé suivant l'invention permet de faire tourner le bras 2 de la centrifugeuse à une vitesse comprise entre 0 et 60 tours/minute, avec des gradients de vitesse de rotation qui peuvent être importants.

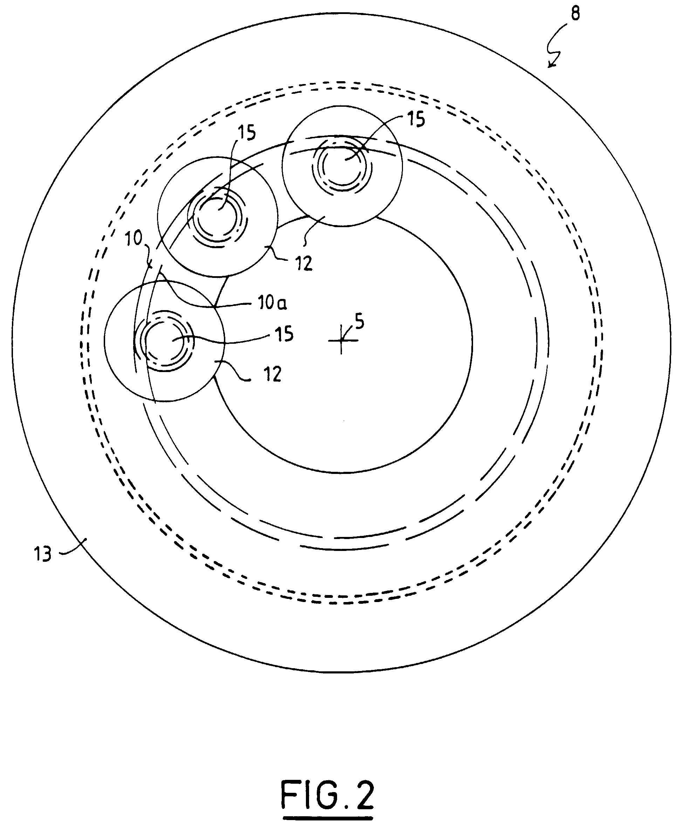

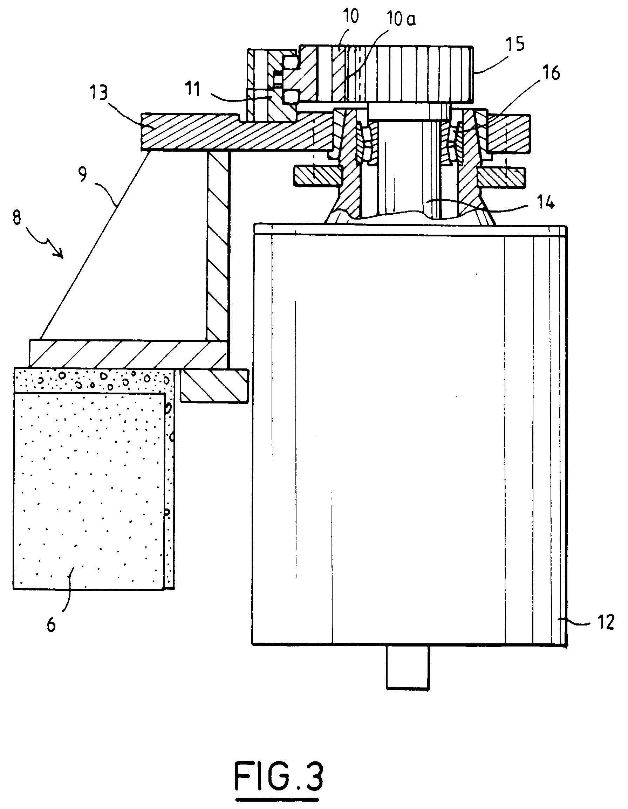

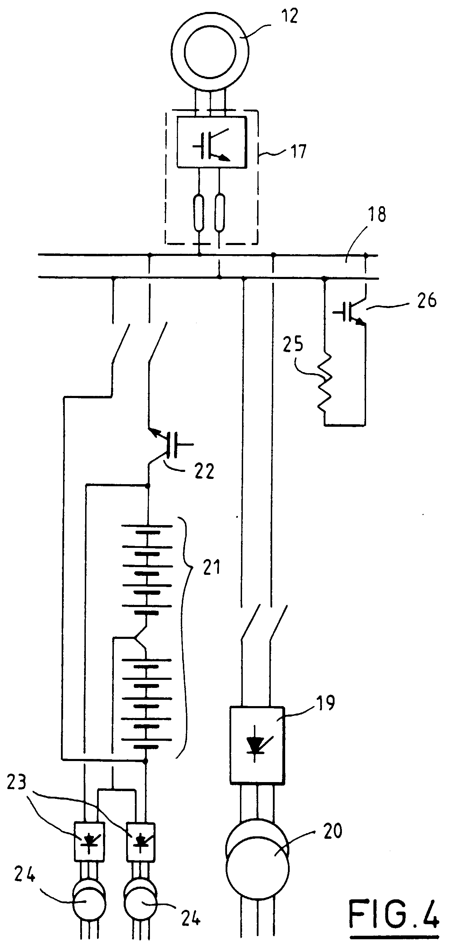

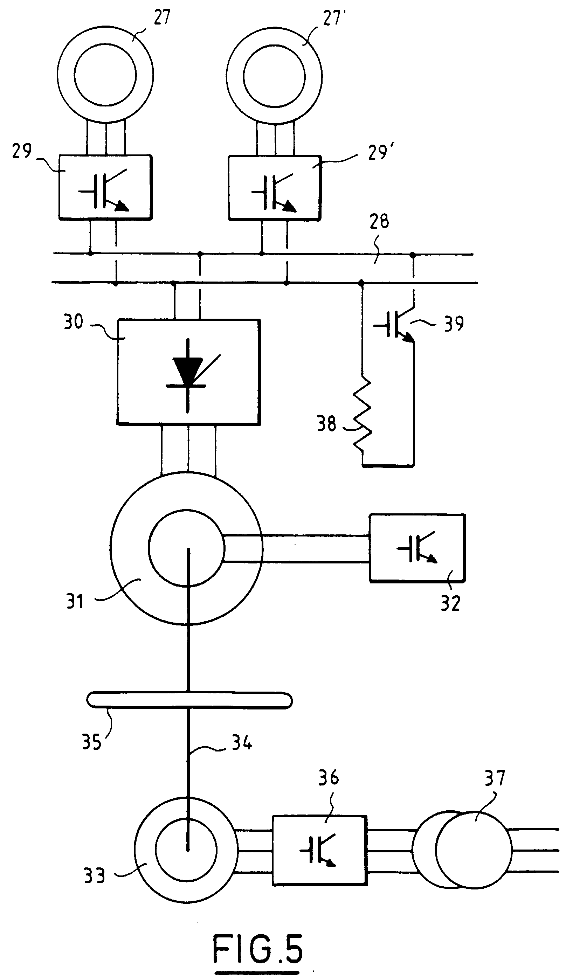

Sur les figures 2 et 3, on a représenté la partie mécanique du dispositif d'entraînement 8 situé à l'intérieur du bâti 6 de la station d'essais et sur les figures 4 et 5, on a représenté la partie électrique du dispositif d'entraînement disposé à l'intérieur du bâti, suivant deux modes de réalisation différents.

Comme il est visible sur les figures 2 et 3, la partie mécanique du dispositif d'entraînement 8 comporte une couronne 10 de grand diamètre qui comporte une denture 10a sur sa surface intérieure et qui est montée rotative autour de l'axe de rotation 5 de la centrifugeuse, sur le bâti 6 de la station d'essais.

Comme il est visible sur la figure 3, la couronne dentée 10 est montée rotative par l'intermédiaire du palier à roulement 11 sur un socle 9 reposant de manière très stable sur la fondation 6 de la station d'essais.

La couronne 10 peut être accouplée à l'arbre d'entraînement 7 du bras 2 de la centrifugeuse, pour réaliser l'entraînement en rotation du bras 2 de la centrifugeuse 1, grâce au dispositif d'entraînement 8.

Dans le cas d'une centrifugeuse utilisée pour l'entraînement d'un pilote d'aéronef, le rayon du bras 2, c'est-à-dire la distance entre l'axe 5 de rotation du bras et l'axe 4 de suspension de la nacelle 3 à l'extrémité du bras, peut être de l'ordre de huit mètres.

Dans ce cas, la couronne d'entraînement 10 de l'arbre 7 du bras peut présenter un diamètre moyen de l'ordre de trois mètres.

La couronne dentée 10 peut être entraînée en rotation autour de l'axe 5 par un ensemble de moteurs asynchrones 12 fixés à l'intérieur du bâti de la station d'essais, en-dessous de la plaque circulaire 13 du carter du dispositif d'entraînement reposant sur le socle 9.

Les moteurs asynchrones 12 sont tous identiques et comportent un rotor entraînant en rotation un arbre 14 disposé verticalement à l'extrémité supérieure duquel est fixé un pignon d'entraînement 15.

Chacun des pignons 15 solidaires des arbres des moteurs asynchrones 12 engrène avec la denture intérieure de la couronne 10. Chacun des arbres 14 des moteurs asynchrones 12 est monté rotatif dans un double palier à roulement 16 fixé dans l'épaisseur du plateau 13 du carter du dispositif d'entraînement 8.

Dans le cas d'un dispositif d'entraînement suivant l'invention et suivant un premier mode de réalisation, on utilise, pour assurer la mise en rotation de la couronne solidaire de l'arbre d'entraînement du bras de la centrifugeuse, huit moteurs asynchrones ayant une puissance mécanique nominale unitaire de 125 kW et une vitesse de rotation de l'ordre de 300 tours/minute. De tels moteurs asynchrones à vitesse lente permettent d'entraîner la couronne 10 et l'arbre d'entraînement du bras de la centrifugeuse à une vitesse comprise entre 0 et 60 tours/minute avec un rapport de réduction faible.

De manière typique, la couronne 10 peut comporter une denture 10a présentant cent soixante seize dents, les pignons 15 comportant vingt et une dents. Dans ce cas, le rapport de réduction est de l'ordre de 8,4.

Les moteurs asynchrones dont les pignons sont répartis suivant la périphérie interne de la couronne 10 sont alimentés et commandés par l'intermédiaire d'un dispositif d'alimentation et de commande représenté sur la figure 4. Ce dispositif permet en particulier de fournir une très forte puissance électrique au moteur pendant les phases d'accélération de la centrifugeuse et de faire varier la vitesse de rotation de la couronne et de l'arbre de la centrifugeuse, en fonction d'un programme donné, par commande du couple et de la vitesse de rotation des huit moteurs asynchrones.

Le dispositif d'alimentation et de commande de chacun des moteurs asynchrones 12 qui sera décrit ci-dessous permet de fournir une très forte puissance électrique au moteur pendant les phases transitoires de courte durée pendant lesquelles on réalise la montée en vitesse du bras de la centrifugeuse.
Le dispositif d'alimentation utilisé permet d'éviter de tirer une très forte puissance sur le réseau alimentation la station d'essais, du fait de l'utilisation d'un moyen d'accumulation d'énergie électrique.

En outre, le système d'alimentation et de commande de chacun des moteurs asynchrones 12 permet de dissiper l'énergie de freinage du bras de la centrifugeuse, lors des phases de décélération du bras.

Sur la figure 4, on a représenté un système d'alimentation d'un moteur asynchrone 12 assurant l'entraînement de la couronne 10 et du bras de la centrifugeuse en rotation, par l'intermédiaire d'un pignon 15.

Le moteur 12 est alimenté en courant électrique à partir d'un onduleur à contrôle vectoriel utilisant des commutateurs à IGBT. L'onduleur est alimenté en courant à partir d'un bus à courant continu 18 pouvant admettre une tension continue de 1160 V maximum.

L'utilisation d'onduleurs à IGBT permet d'atteindre les performances voulues en ce qui concerne le fonctionnement dynamique des moteurs, c'est-à-dire les performances en termes de couple et de vitesse de ces moteurs en fonction du temps.

Le bus 18 est alimenté en courant continu à partir d'un redresseur 19 lui-même alimenté à partir du réseau par l'intermédiaire d'un transformateur 20. Le redresseur 19 fournit au bus 18 un courant redressé sous une tension de 1020 volts.

L'énergie continue nécessaire à l'onduleur provient du redresseur 19 à intensité variable alimenté par le réseau. Ce système d'alimentation par le réseau ne fournit que la puissance continue maximale pour faire fonctionner la centrifugeuse à vitesse constante.

Les pointes de puissance et de courant instantané nécessaires lors des accélérations de la centrifugeuse sont fournies par une batterie d'accumulateurs 21 reliée au bus à courant continu 18.

La batterie d'accumulateurs 21 comporte un très grand nombre d'éléments en série pouvant assurer, pendant les phases d'accélération de courte durée, une très forte puissance supplémentaire au bus 18, sous la forme d'un courant continu.

On peut utiliser par exemple cent soixante dix batteries élémentaires comportant elles-mêmes chacune trois éléments de 2 V, de manière à fournir un courant continu sous une tension de 1020 V au bus 18, pendant les phases d'accélération.

Un interrupteur électronique 22 permet de relier la batterie d'accumulateurs au bus à courant continu pour initier une phase d'accélération.

La charge et la recharge de la batterie d'accumulateurs 21 sont assurées par l'intermédiaire de chargeurs 23 alimentés par l'intermédiaire de transformateurs 24, par le réseau de l'utilisateur de la centrifugeuse.

On utilise en particulier un chargeur séparé qui règle la tension de charge indépendamment de la tension dans le bus à courant continu 18.

Le bus à courant continu 18 est également relié à une résistance de dissipation d'énergie de freinage 25 disposée dans un réseau comportant un interrupteur électronique 26. Ce réseau consomme l'énergie de freinage et protège la batterie d'accumulateurs contre les surtensions nuisibles à son bon fonctionnement, lorsque l'onduleur envoie l'énergie électrique sur le bus à courant continu, pendant les phases de freinage de la centrifugeuse.

Chacun des moteurs 12 associé à son onduleur 17, sa batterie d'accumulateurs 21, son alimentation en courant continu stabilisé 19, 20 et le réseau de dissipation d'énergie 25, 26 constitue un ensemble indépendant des autres ensembles, chaque ensemble, appelé système d'alimentation, étant associé à l'un des huit moteurs asynchrones 12.

Un système de régulation unique assure la commande et le contrôle de la centrifugeuse et délivre simultanément à chaque système d'alimentation d'un moteur asynchrone 12, la consigne de couple nécessaire au respect des consignes correspondant au programme de fonctionnement de la centrifugeuse.

La conception modulaire du mode de réalisation qui a été décrit permet, en cas d'incident sur un système d'alimentation, de faire fonctionner la centrifugeuse dont le fonctionnement est alors dégradé avec seulement sept systèmes en service au lieu de huit.

Il est à remarquer que pour mettre et maintenir un système d'alimentation hors service, aucun dispositif de débrayage mécanique n'est nécessaire, du fait qu'un moteur asynchrone déconnecté de son circuit d'alimentation a le comportement d'un dispositif tournant ne faisant intervenir que son inertie dont la valeur faible ne perturbe pas sensiblement les performances de l'ensemble maintenu en service. En cas d'incident se traduisant par une dégradation de l'un des systèmes d'alimentation et de commande d'un moteur asynchrone, le système peut être mis hors service simplement en réalisant une déconnexion de l'alimentation du moteur asynchrone.

Sur la figure 5, on a représenté un module d'alimentation et de commande de deux moteurs asynchrones 27 et 27' assurant, par l'intermédiaire d'un réducteur, l'entraînement d'un pignon en prise avec la couronne de la centrifugeuse.

Chacun des moteurs asynchrones 27 et 27' est alimenté en courant électrique par l'intermédiaire d'un onduleur 29, 29' lui-même alimenté en courant continu par l'intermédiaire d'un bus à courant continu 28.

Les onduleurs 29 et 29' sont des onduleurs IGBT permettant d'assurer une commande de couple des moteurs asynchrones, à partir d'une unité de commande commune à l'ensemble des moteurs d'entraînement de la centrifugeuse.

Le couple d'entraînement qui doit être transmis à l'arbre d'entraînement de la centrifugeuse, en fonction du programme de vitesse et d'accélération imposé à la centrifugeuse est obtenu à partir de la commande centrale, en commandant le couple et la vitesse de chacun des moteurs asynchrones, à partir de l'onduleur correspondant.

Le bus à courant continu 28 est relié, pour son alimentation, à un redresseur à thyristor 30 recevant sur sa partie d'entrée, le courant produit par un alternateur 31 comportant un dispositif d'excitation électronique 32.

L'alternateur est entraîné par un moteur asynchrone 33 alimenté par le réseau, par l'intermédiaire d'un convertisseur 36 et d'un transformateur 37.

Sur l'arbre 34 de jonction entre le moteur 33 et l'alternateur 31, est fixé un volant 35 présentant une forte inertie.

Un circuit de freinage comportant une résistance de freinage 38 et un interrupteur électronique 39 est relié au bus 28.

Les pointes de puissance nécessaires pendant les phases d'accélération de la centrifugeuse sont fournies par les alternateurs 31 qui peuvent développer une forte puissance et qui sont entraînés chacun par un arbre 34 sur lequel est fixé un volant 35 de stockage d'énergie.

Dans le cas d'une centrifugeuse dont le bras présente un rayon de rotation de l'ordre de 8 m, on utilise quatre alternateurs d'une puissance de 1800 kW fournissant chacun, par l'intermédiaire d'un redresseur à thyristor, du courant continu à trois onduleurs tels que 29 et 29' assurant l'alimentation de trois moteurs asynchrones tels que 27 et 27' d'entraînement de l'arbre du bras de la centrifugeuse.

Les alternateurs 31 sont mis en rotation chacun à l'aide d'un moteur d'une puissance de 250 kW mettant en rotation l'arbre d'entraînement de l'alternateur, sur lequel est disposé le volant d'inertie 35. Le volant d'inertie 35 permet de stocker et de fournir à l'alternateur la puissance voulue pendant les phases d'accélération du bras de la centrifugeuse.

Pendant les phases de freinage de la centrifugeuse, l'énergie est absorbée dans le circuit de freinage comportant la résistance 38.

La puissance maximale demandée au réseau est de 1 MW, cette puissance étant nécessaire pour l'alimentation des moteurs entraînant les alternateurs.

Le circuit de freinage est prévu pour pouvoir absorber une puissance de 1 MW.

On utilise douze moteurs d'une puissance de 315 kW qui sont regroupés deux par deux pour assurer l'entraînement d'un pignon engrènant avec la couronne reliée à l'arbre d'entraînement du bras de la centrifugeuse.

Dans le cas du second mode de réalisation, comme dans le cas du premier mode de réalisation, on peut réaliser les phases d'accélération de la centrifugeuse sans prélever une puissance excessive sur le réseau, la puissance moyenne réellement consommée étant toujours inférieure à 1 MW.

La puissance de freinage est également absorbée, lorsque les onduleurs 29 et 29' d'alimentation des moteurs 27 et 27' renvoient l'énergie électrique dans le bus à courant continu 28.

Dans tous les cas, le dispositif d'entraînement suivant l'invention n'utilise que des composants couramment utilisés dans l'industrie et disponibles dans le commerce.

La fiabilité et la durée de vie de ces composants permettent d'assurer un fonctionnement de la centrifugeuse sur de très longues périodes d'utilisation.

Le remplacement d'un composant peut être réalisé rapidement et sans difficultés.

En outre, le dispositif suivant l'invention, quel que soit son mode de réalisation, permet de réaliser les phases d'accélération de la centrifugeuse sans prélever une puissance excessive sur le réseau d'alimentation de la station d'essais et les phases de freinage en absorbant l'énergie électrique envoyée dans le module d'alimentation.

L'invention ne se limite pas aux modes de réalisation qui ont été décrits.

C'est ainsi qu'on peut imaginer l'utilisation de dispositifs de stockage d'énergie différents d'une batterie d'accumulateurs ou d'un volant d'inertie fixé sur un arbre d'entraînement d'un alternateur.

Les différents composants qui ont été décrits peuvent être remplacés par des composants équivalents disponibles sur le marché.

L'invention s'applique à toute centrifugeuse de grandes dimensions dont la vitesse de rotation peut varier avec un fort gradient.

## Revendications

1. Dispositif d'entraînement en rotation d'un bras (2) d'une centrifugeuse (1) de grandes dimensions, dont la vitesse de rotation peut varier avec un fort gradient, le bras de la centrifugeuse (2) étant relié à un arbre d'entraînement (7) pour sa mise en rotation, caractérisé par le fait que l'arbre d'entraînement (7) de la centrifugeuse (1) est relié à une couronne dentée (10) en prise avec une pluralité de pignons (15) entraînés chacun en rotation par un système d'entraînement comportant :
- au moins un moteur asynchrone (12) dont l'arbre (14) est relié à un pignon (15) engrènant avec la couronne (10),
- un système d'alimentation du moteur asynchrone (12) en courant électrique comprenant, reliés à un bus (18, 28) à courant continu, une source de courant continu (19, 20, 30, 31), un onduleur (17, 29, 29') réalisant le contrôle vectoriel du moteur asynchrone (12, 27, 27') et un moyen de stockage d'énergie (21, 35) pouvant fournir un courant continu au bus (18, 28), et
- au moins une résistance électrique (25, 38) de dissipation d'énergie disposée sur un circuit de dissipation d'énergie relié au bus (18, 28).

2. Dispositif suivant la revendication 1, caractérisé par le fait que le dispositif de stockage d'énergie (21) est constitué par une batterie d'accumulateurs et que la source de courant continu (19, 20) reliée au bus (18) est constituée par un redresseur (19) relié par l'intermédiaire d'un transformateur (20) à un réseau électrique.

3. Dispositif suivant la revendication 2, caractérisé par le fait que la batterie d'accumulateurs (21) est reliée à au moins un chargeur électrique (23) alimenté par l'intermédiaire d'un transformateur (24) par le réseau électrique.

4. Dispositif suivant la revendication 1, caractérisé par le fait que la source de courant électrique continu (30, 31) est constituée par un alternateur relié à un redresseur (30) lui-même connecté au bus à courant continu (28), l'alternateur (31) étant entraîné par un moteur électrique (33) alimenté par le réseau électrique et le dispositif de stockage d'énergie (35) étant constitué par un volant d'inertie fixé sur un arbre d'entraînement (34) reliant le moteur (33) et l'alternateur (31).

5. Dispositif d'entraînement suivant l'une quelconque des revendications 2 et 3, caractérisé par le fait qu'il comporte huit moteurs asynchrones (12) comportant chacun un arbre (14) sur lequel est fixé un pignon (15) engrènant avec une denture (10a) de la couronne (10), les pignons (15) étant régulièrement répartis suivant la périphérie de la couronne (10).

6. Dispositif d'entraînement suivant l'une quelconque des revendications 1 à 5, caractérisé par le fait que les pignons (15) engrènent avec une denture (10a) de la couronne dentée (10) disposée suivant sa périphérie interne.
